# EUROPEAN PATENT APPLICATION

(11) **EP 3 979 202 A1**
(43) Date of publication of application: **06.04.2022**
(21) Application number: 20831054.0
(22) Date of filing: 18.06.2020
(51) Int. Cl.: G06T 7/55

(54) **IMAGE PROCESSING METHOD AND DEVICE, AND STORAGE MEDIUM**

(30) Priority: 24.06.2019 CN 201910551552
(71) Applicant: GUANGDONG OPPO MOBILE TELECOMMUNICATIONS CORP., LTD., Dongguan, Guangdong 523860 (CN)
(72) Inventor: WANG, Lu, Dongguan, Guangdong 523860 (CN)
(74) Representative: Ipside
(86) International application number: PCT/CN2020/096822
(87) International publication number: WO 2020/259385

(57) **Abstract**

An image processing method and a device, and a computer readable storage medium. The method is used in the image processing device, and comprises: when a request instruction for an image application function is detected, in response to the request instruction, transmitting an acquired emission parameter to an emission driving module, and controlling an infrared camera to transmit a trigger signal to the emission driving module (S501 ); in response to the trigger signal, and by means of the emission driving module, controlling a structured light emitter to emit laser light according to the emission parameter, and transmitting a synchronization signal to the infrared camera by means of the emission driving module (S502); in response to the synchronization signal, controlling the infrared camera to collect a speckle image of an object to be measured (S503); controlling the infrared camera to transmit the speckle image to an image processing module (S504 ); and controlling the image processing module to perform depth calculation on the speckle image to obtain a depth image of the object to be measured, and implementing the image application function on the basis of the depth image, the depth image representing the three-dimensional structural features of the object to be measured (S505).

## Description

### CROSS-REFERENCE TO RELATED APPLICATIONS

The present application claims the foreign priority of Chinese Patent Application No. 201910551552.4, filed on June 24, 2019, the entire contents of which are hereby incorporated by reference in its entirety.

### TECHNICAL FIELD

The present application relates to the field of structured light technologies, and particularly to an image processing method and apparatus, and storage medium.

### BACKGROUND

At present, mobile phones and other mobile devices are increasingly using three-dimensional (3D, 3-Dimension) structured light technology to realize image application functions such as face-unlock, face payment, and 3D modeling. Specifically, a depth processing chip drives a structured-light emitter to emit light with certain structural characteristics and project it onto a to-be-detected object; meanwhile, an infrared camera shoots the to-be-detected object and collects speckle images of the to-be-detected object; the depth processing chip receives the speckle images from the infrared camera and calculates a depth of the speckle images to acquire depth images of the to-be-detected object, and the depth images reflect the spatial position information of the to-be-detected object, and then the image application functions may be realized based on the depth images.

However, since a laser emission of a structured-light emitter is controlled by the depth processing chip, which is written once and cannot be changed, an emission driver function in the depth processing chip cannot be repaired directly when it fails or is not applicable, and then it is not possible to ensure a stable acquisition of depth images, which in turn leads to poor stability of the image application function.

### SUMMARY OF THE DISCLOSURE

The present disclosure provides an image processing method and apparatus, and a computer-readable medium to improve a stability of an image application function.

The technical solution of the present disclosure is realized according to the following.

An image processing method is provided by an embodiment of the present disclosure, and is for an image processing apparatus, wherein the image processing apparatus comprises an infrared camera, a structured-light emitter, an emission driver module, and an image processing module, the method includes the following.

In response to a request instruction of an image application function, transferring acquired emission parameters to the emission driver module, and controlling the infrared camera to transmit a trigger signal to the emission driver module, when detecting the request instruction of the image application function.

Controlling the structured-light emitter to emit a laser by the emission driver module, and transmitting a synchronization signal to the infrared camera by the emission driver module, in response to the trigger signal.

Controlling the infrared camera to collect speckle images of a to-be-detected object, in response to the synchronization signal.

Controlling the infrared camera to transfer the speckle images to the image processing module.

Controlling the image processing module to acquire depth images of the to-be-detected object by performing depth calculation on the speckle images, and realize the image application function based on the depth images, wherein the depth images represent 3-Dimensional (3D) structure features of the to-be-detected object.

In the above solution, the image processing module includes a signal modulation module.

In response to a request instruction of an image application function, the transferring acquired emission parameters to the emission driver module includes the following.

Transferring the request instruction to the image processing module.

Controlling the image processing module to transfer the emission parameters to the emission driver module, in response to the request instruction.

In the above solution, the infrared camera includes a signal modulation signal, a trigger module, and a timing control circuit.

In response to a request instruction of an image application function, the transferring acquired emission parameters to the emission driver module, and controlling the infrared camera to transmit a trigger signal to the emission driver module, include the following

Transferring the request instruction to the timing control circuit.

Controlling the signal modulation module to transfer the emission parameters to the emission driver module, and controlling the trigger module to transmit the trigger signal to the emission driver module, by the timing control circuit, in response to the request instruction.

In the above solution, the infrared camera includes an image collecting module.

The controlling the infrared camera to collect speckle images of a to-be-detected object includes the following.

Transmitting the synchronization signal to the timing control circuit.

Controlling the image collecting module to collect the speckle images periodically, by the timing control circuit, in response to the synchronization signal.

In the above solution, the infrared camera comprises a signal modulation module.

Before the controlling the structured-light emitter to emit a laser by the emission driver module, in response to the trigger signal, the method further includes the following.

Transferring a parameter modification instruction to the signal modulation module, in response to receiving the parameter modification instruction.

Acquiring updated emission parameters by controlling the signal modulation signal to modify the emission parameters, in response to the parameter modification instruction.

In the above solution, the controlling the structured-light emitter to emit a laser by the emission driver module, in response to the trigger signal, includes the following.

Controlling the structured-light emitter to emit a laser according to the updated emission parameters, by the emission driver module, in response to the trigger signal.

In the above solution, the request instruction comprises a face-unlock request, and the image processing apparatus further includes a visible light camera.

The transferring acquired emission parameters to the emission driver module, and controlling the infrared camera to transmit a trigger signal to the emission driver module by controlling the infrared camera in response to a request instruction of an image application function, when detecting the request instruction of the image application function, includes the following.

Controlling the visible light camera to collect a visible light image of the to-be-detected object in response to the face-unlock request, when detecting the face-unlock request.

Acquiring a recognition result by performing face recognition on the visible light image.

Transferring the emission parameters to the emission driver module, and controlling the infrared camera to transmit the trigger signal to the emission driver module, in response to detecting that the recognition result shows the to-be-detected object is a target object.

In the above solution, the realize the image application function based on the depth images, includes the following.

Acquiring a target depth image.

Calculating a similarity between the depth images and the target depth image.

Generating a face-unlock response when detecting the similarity being greater than or equal to a preset similarity threshold; opening an unlock page in response to the face-unlock response.

In the above solution, the request instruction includes a 3D modeling request, and the image processing apparatus comprises a visible light camera.

Before the transferring acquired emission parameters to the emission driver module, the method further comprises the following.

Controlling the visible light camera to collect a visible light image of the to-be-detected object in response to the 3D modeling request, when detecting the 3D modeling request.

In the above solution, the realize the image application function based on the depth images, comprises the following.

Performing color rendering on the depth images to acquire a 3D color image by utilizing the visible light image, and displaying the 3D color image.

In the above solution, after the transferring acquired emission parameters to the emission driver module, and controlling the infrared camera to transmit a trigger signal to the emission driver module, the method further comprising the following.

Controlling the infrared camera to start counting time at a moment of beginning to transfer the trigger signal, which is used as a start time.

Acquiring a time length, until detecting that the infrared camera receives the synchronization signal.

Controlling the infrared camera to generate an exception warning message when the time length is larger than or equal to a preset time length, and displaying the warning message, wherein the exception warning message represents that an occurs in the emission driver module.

An image processing apparatus is provided by an embodiment of the present disclosure, the image processing apparatus includes a control module, an infrared camera, a structured-light emitter, an emission driver module, and an image processing module, wherein the control module is connected to the infrared camera and the image processing module via a bus, the infrared camera is connected to the control module, the emission driver module, and the image processing module, the image processing module is connected to the control module and the infrared camera.

The control module, configured for transferring acquired emission parameters to the emission driver module, and transmitting a trigger signal to the emission driver module by controlling the infrared camera, in response to the request instruction, when detecting a request instruction of an image application function.

The emission driver module, configured for emitting a laser by controlling the structured-light emitter, and transmitting a synchronization signal to the infrared camera, in response to the trigger signal.

The infrared camera, configured for collecting speckle images of a to-be-detected object, in response to the synchronization signal; transferring the speckle images to the image processing module.

The image processing module, configured for acquiring depth images of the to-be-detected object by performing depth calculation on the speckle images, and realizing the image application function based on the depth images, wherein the depth images represents 3D structure features of the to-be-detected object.

An image processing apparatus is provided by an embodiment of the present disclosure, image processing apparatus includes an infrared camera, a structured-light emitter, an emission driver module, and an image processing module, the infrared camera is connected to the emission driver module, and the image processing module, the structured-light emitter is connected to the emission driver module; the image processing module further comprises: a processor, a memory, and a communication bus, the memory communicates with the processor via the communication bus, and the memory stores one or more programs that are executable to the processor; when the one or more programs are executed, the infrared camera, the structured-light emitter, the emission driver module, and the image processing module are controlled by the processor, to execute the method of any one of the above image processing methods.

A computer-readable non-transitory storage medium is provided by an embodiment of the present disclosure, wherein the computer-readable non-transitory storage medium stores one or more programs, the one or more programs are executed by one or more processors, to realize a method of any one of the above image processing methods.

An image processing method and a device, and a computer-readable non-transitory storage medium are provided by an embodiment of the present disclosure, the method includes: transferring acquired emission parameters to an emission driver, and transmitting a trigger signal to the emission driver by controlling the infrared camera, thus, emitting a laser by the emission driver module controlling the structured-light emitter according to the emission parameters; and transmitting a synchronization signal to the infrared camera by the emission driver module, in response to the synchronization signal, the infrared camera collecting speckle images of a to-be-detected object by controlling the infrared camera, while the structured-light emitter emitting the laser; finally, acquiring depth images of the to-be-detected object by controlling the image processing module to perform depth calculation on the speckle images, and realizing the image application function based on the depth images. By adopting the above method of, acquiring the emission parameters by the emission module, and receiving the trigger signal from the infrared camera, emitting the laser by controlling the structured-light emitter, and collecting the speckle images by controlling the infrared camera while emitting the laser; rather than, integrating an emission driver function into a depth processing chip, and emitting a laser by the depth processing chip controlling a structured-light emitter and collecting speckle images by the depth processing chip controlling an infrared camera; and therefore, allowing the emission driver module not to rely on the depth processing chip and work independently; thus, when the emission driver module fails or is not applicable, it is easier to be repaired; and ensuring that collecting the speckle images normally, and further ensuring that acquiring the depth images normally, finally improving the stability of the image application function.

### BRIEF DESCRIPTION OF THE DRAWINGS

FIG. 1 is a schematic diagram of an image processing apparatus according to an embodiment of the present disclosure.
FIG. 2 is schematic diagram of positions of apparatuses when collecting speckle images according to an embodiment of the present disclosure.
FIG. 3(a) is a schematic diagram of a flare image according to an embodiment of the present disclosure.
FIG. 3(b) is a schematic diagram of a speckle image according to an embodiment of the present disclosure.
FIG. 3(c) is a schematic diagram of depth images according to an embodiment of the present disclosure.
FIG. 4(a) is a structural schematic diagram of an image processing apparatus according to another embodiment of the present disclosure.
FIG. 4(b) is a structural schematic diagram of an image processing apparatus according to further another embodiment of the present disclosure.
FIG. 5 is a flow chart of an image processing method according to an embodiment of the present disclosure.
FIG. 6 is a structural schematic diagram of an image processing apparatus according to further another embodiment of the present disclosure.
FIG. 7 is a structural schematic diagram of an image processing apparatus according to further another embodiment of the present disclosure.
FIG. 8(a) is a structural schematic diagram of an infrared camera according to an embodiment of the present disclosure.
FIG. 8(b) is a structural schematic diagram of an infrared camera according to another embodiment of the present disclosure.
FIG. 9 is a flow chart of an image processing method according to another embodiment of the present disclosure.
FIG. 10 is a flow chart of an image processing method according to further another embodiment of the present disclosure.
FIG. 11 is a structural schematic diagram of an image processing apparatus according to further another embodiment of the present disclosure.

### DETAILED DESCRIPTION

Technical solutions of the present disclosure may be clearly and comprehensively described by referring to the accompanying drawings.

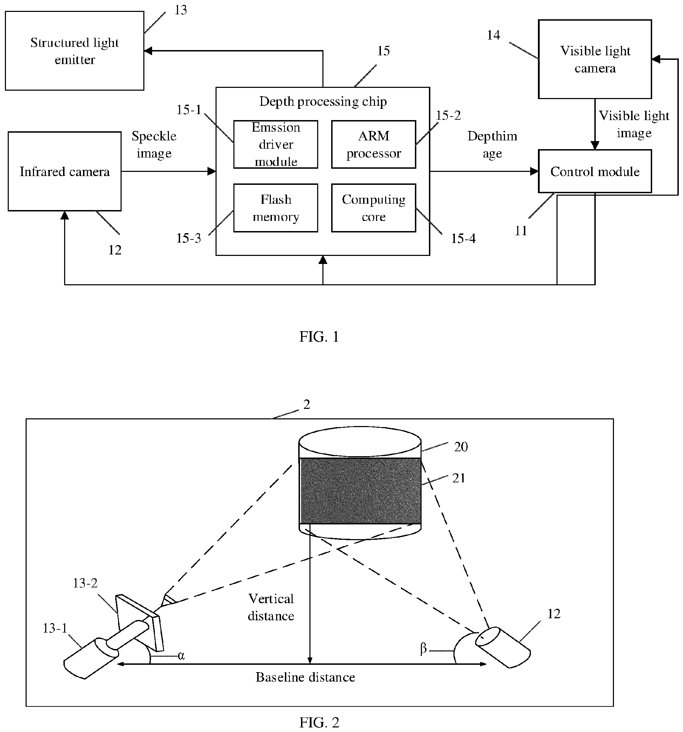

A schematic diagram of an image processing apparatus for realizing an image application function based on depth images is shown in Fig. 1, FIG. 1 is a schematic diagram of an image processing apparatus according to an embodiment of the present disclosure. The image processing apparatus includes a control module 11, an infrared camera 12 (IR camera, Infrared Radiation Camera), a structured light camera 13, a visible light camera 14, and a depth processing chip 15; the depth processing chip 15 includes an emission driver module 15-1. The control module 11 is connected to the infrared camera 12, the visible light camera 14, and the depth processing chip 15; the infrared camera 12 is connected to the control module 11 and the depth processing chip 15; the depth processing chip 15 is connected to the control module 11, the infrared camera 12, and the structured-light emitter 13; the visible light camera is connected to the control module 11.

Based on the image processing apparatus shown in FIG. 1, the control module 11 generates a request instruction of an image application function, when the image application function turned on by a user is detected; the control module 11 transfers the request instruction to the infrared camera 12, the visible light camera 14, and the depth processing chip 15 via an integrated circuit bus (I2C Circuit); in response to the request instruction, the depth processing chip 15 controls the emission driver module 15-1 to drive the structured-light emitter 13 to emit a laser with certain characteristics, the laser is projected to the to-be-detected object. At a moment synchronized with a start time of the laser emission, the infrared camera 12 starts to shoot the to-be-detected object, and collects speckle images of the to-be-detected object; due to different distances from the structured-light emitter 13 at each place in the to-be-detected object, a variation of the light structure at each place in the to-be-detected object is also different. The infrared camera 12 sends the speckle images to the depth processing chip 15, the depth processing chip 15 processes the speckle images and converts changes in the light structure at various places in the to-be-detected object into depth information, to acquire depth images of the to-be-detected object. 3D structure features of the to-be-detected object are acquired according to the depth images, and the image application function is realized based on the 3D structure features.

It should be noted that, at present, the image processing apparatus as shown in FIG. 1, in order to synchronize the start time of the infrared camera 12 and the start time of the structured-light emitter 13, a laser pulse frequency of the depth processing chip 15 and a collection frequency of the infrared camera 12 need to be synchronized in advance.

Exemplarily, the control module 11 may include a sensor and a processor, an input operation of a user is detected by the sensor, and the operation is transferred to the processor. The processor determines whether the operation meets a requirement of turning on an image application function, when the operation meets the requirement of turning on the image application function, a request instruction of the image application function is generated; when the operation does not meet the requirement of turning on the image application function, the request instruction is not generated.

Exemplarily, the depth processing chip 15 includes an ASIC (Application Specific Integrated Circuit); the ASIC includes an emission driver module 15-1, an ARM (Advanced RISC Machines) processor 15-2, a Flash Memory 15-3, and a computing Core 15-4. When the control module 11 transfers a request instruction of the image application function to the ASIC via an I2C bus, the ARM processor 15-2 receives the request instruction via the I2C bus, the request instruction is stored in the flash memory 15-3; according to the request instruction and a program pre-numbered by a user, the emission driver module 15-1 drives the structured-light emitter 13. On the other hand, when the infrared camera 12 transfers speckle images to the ASIC, the ARM processor 15-2 transfers the speckle images to the computing core 15-4, the computing core 15-4 performs depth calculation on the speckle images, and depth images is acquired.

In some embodiments, FIG. 2 is a schematic diagram of positions of apparatuses when collecting speckle images according to an embodiment of the present disclosure. The structured-light emitter 13 includes a NIR laser 13-1 and a Diffractive Optical Elements 13-2. The NIR laser 13-1 and the diffractive optical elements 13-2 are at the same location of the image processing apparatus 1, the diffractive optical elements 13-2 is located near a laser emitting side of the NIR laser 13-1, the NIR laser 13-1 and the infrared camera 12 are arranged in a spaced manner parallelly in the image processing apparatus 1. A distance between the NIR laser 13-1 and the infrared camera 12 is a baseline distance, such as 40mm; A to-be-detected object 20 is located in a light-projecting area of the structured-light emitter 13, and a shooting area of the infrared camera 12. The light-projecting area includes the area within the two dashed lines connected to the diffractive optical elements 13-2 in FIG. 2. The shooting area includes the area within the two dashed lines connected to the infrared camera 12 in FIG. 2. The distance from the to-be-detected object 20 to the line of the NIR laser 13-1 and the infrared camera 12 is the vertical distance, an irradiation angle from the NIR laser 13-1 to the to-be-detected object 20 is α, and an angle of view from the infrared camera 12 to the to-be-detected object 20 is β; wherein a wavelength of an IR sensor in the infrared camera 12 is equal to a laser wavelength of the NIR laser 13-1, and the infrared camera 12 may be a NIR camera.

Further, the NIR laser 13-1 emits a laser of a certain wavelength to the diffractive optical elements 13-2, which diffuses the laser to form a flare pattern 21; the speckle 21 is projected onto the to-be-detected object 20, which is composed of tens of thousands of diffractive spots in a certain angle range. The to-be-detected object 20 with the flare pattern 21 is shot using the infrared camera 12, and black and white speckle images are acquired; depth information is calculated for the speckle images, and depth images is acquired.

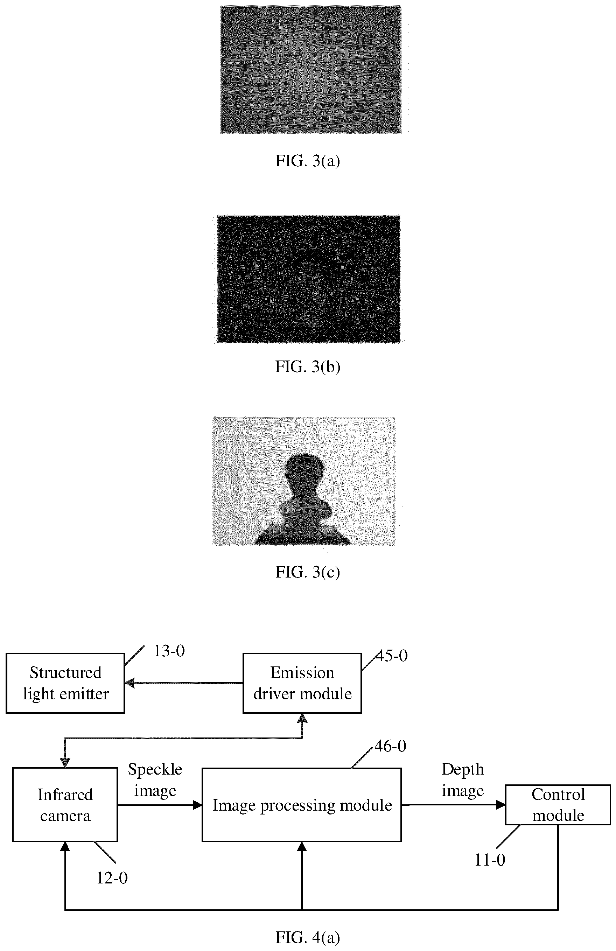

Exemplarily, the NIR laser 13-1 is a laser that shoots a laser with a wavelength of 940nm, for example, a VCSEL (Vertical Cavity Surface Emitting Laser), after the diffractive optical elements 13-2 diffuses the laser with a wavelength of 940nm, a flare pattern is formed; when the flare pattern is projected onto a standard object, the infrared camera 12 shoots the standard object, to acquire a flare image is acquired as shown in FIG. 3(a), the standard object includes a plane; when the flare pattern is projected onto a portrait sculpture, the portrait sculpture is shot using the infrared camera 12, to acquire a speckle image as shown in FIG. 3(b); depth information is calculated for the speckle images, to acquire depth images as shown in FIG. 3(c), a color shade of the depth images indicates the distance from the structured-light emitter 13 at various places in the portrait sculpture.

In some embodiments, the image processing apparatus 1 further includes a visible light camera 14 and a light source. The visible light camera 14, the NIR laser 13-1 and the infrared camera 12 are arranged in a spaced manner parallelly in the image processing apparatus 1; the light source is located near the visible light camera 14, fill light for the visible light camera 14; wherein the visible light camera 14 includes an RGB camera.

It should be noted that, at present, since the image processing apparatus as shown in FIG. 1 integrates the emission driver module 15-1 of the structured-light emitter 13 into the depth processing chip, and the circuit space occupied by the emission driver module 15-1 is large, it will result in a high integration requirement for the depth processing chip and the size of the depth processing chip will be too large. Moreover, since the emission driver module 15-1 is also integrated into the depth processing chip, for the structured light signal, such as a laser pulse signal, is also controlled and modulated inside the depth processing chip. The depth processing chip is usually pre-programmed and cannot be modified, thus the depth processing chip cannot handle adjust the modulation mode of the structured light signal flexibly; furthermore, in the present image processing apparatus, when the emission driver module 15-1 fails or is not applicable, it is difficult and high-cost to replace or repair, and cannot ensure a stable acquisition of the depth images, which in turn leads to poor stability of the image application function.

An image processing method is provided by an embodiment of the present disclosure, for an image processing apparatus. FIG. 4(a) is a structural schematic diagram of an image processing apparatus according to another embodiment of the present disclosure. The image processing apparatus 41 includes a control module 11-0, an infrared camera 12-0, a structured-light emitter 13-0, an emission driver module 45-0, and an image processing module 46-0. The control module 11-0 is connected to the infrared camera 12-0 and the image processing module 46-0 via an I2C bus; the infrared camera 12-0 is connected to the control module 11-0, the emission driver module 45-0, and the image processing module 46-0; the image processing module 46-0 is connected to the control module 11-0 and the infrared camera 12-0.

One skilled in the art may understand, the image processing apparatus shown in FIG. 4(a) does not constitute a limitation of the image processing apparatus; the image processing apparatus may include more or fewer components than illustrated, or a combination of certain components, or a different arrangement of components; the image processing apparatus may be realized in various forms, for example, for mobile terminals including, such as mobile phones, tablets, laptops, palmtops, etc., and fixed terminals such as desktop computers.

In an embodiment of the present disclosure, based on the image processing apparatus 41 shown in FIG. 4(a), when a terminal turns on an image application function based on structured light technology, for example, when a user turns on a face-unlock function or a face payment function, the control module 11-0 detects a request instruction of the image application function corresponding to the face-unlock; in response to the request instruction, the control module 11-0, via the I2C bus, sends a start instruction to the infrared camera 12-0 and the image processing module 46-0. In response to the start instruction, the image processing module 46-0 enters a ready state, the infrared camera 12-0 enters a start state and sends a trigger signal to the emission driver module 45-0; in response to the trigger signal, the emission driver module 45-0 turns on, drives and controls the structured-light emitter 13-0 to emit a laser, meanwhile, sends a synchronization signal to the infrared camera 12-0; in response to the synchronization signal, the infrared camera 12-0 starts to expose, to acquire speckle images of the to-be-detected object (such as a face); the infrared camera 12-0 transfers the speckle images to the image processing module 46-0, the image processing module 46-0, after receiving the speckle images, performs depth calculation on the speckle images, to acquire depth images of the to-be-detected object, wherein the depth images embodies 3D structural features of the to-be-detected object (such as a face). Thus, the image processing apparatus 41 may, according to the depth images of the to-be-detected object, complete the image application function corresponding to the request instruction, such as face-unlock, face payment, etc., which is not limited by the embodiment of the present disclosure.

Understandably, in comparison to FIG. 1, the emission driver module 45-0 in FIG. 4(a) may function independently from the depth processing chip 15 that realizes the image application function, or from the image processing module 46-0, and therefore maintainability of the image processing apparatus is improved; moreover, the laser emitting time of structured-light emitter 13-0 and the exposure collecting time of the infrared camera 12-0 may be synchronized by the synchronization signal, and thus avoiding a complicated pre-commissioning process; ensuring that collecting the speckle images and acquiring the depth images normally; finally improving the stability of the image application function.

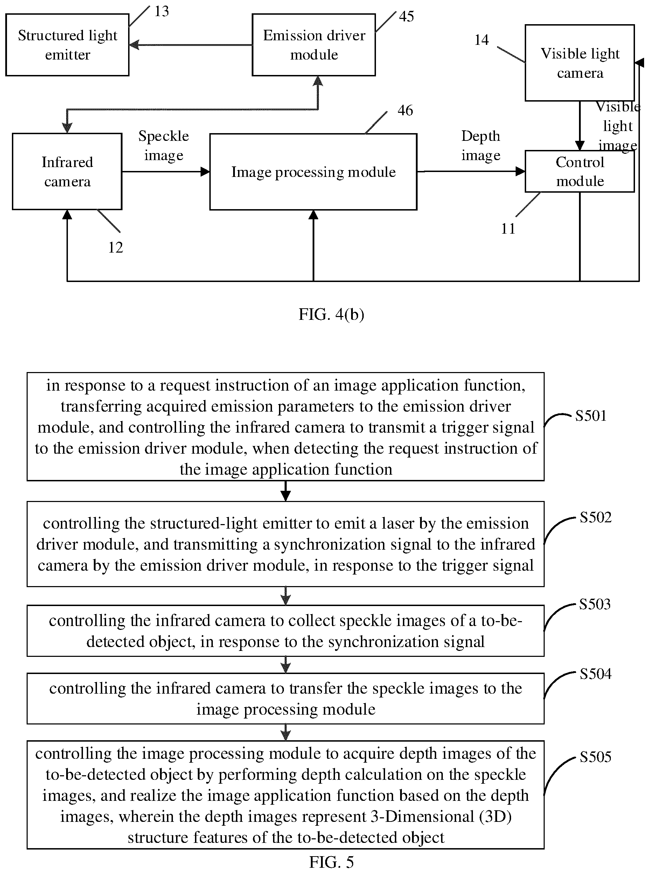

FIG. 4(b) is a structural schematic diagram of an image processing apparatus according to further another embodiment of the present disclosure. The image processing apparatus 4 includes a control module 11, an infrared camera 12, a structured-light emitter 13, a visible light camera 14, an emission driver module 45, and an image processing module 46. The control module 11 is connected to the infrared camera 12, the visible light camera 14, and the image processing module 46 via I2C bus; the infrared camera 12 is connected to the control module 11, the emission driver module 45, and the image processing module46; the image processing module 46 is connected to the control module 11 and the infrared camera 12; the visible light camera 14 is connected to the control module 11.

In an embodiment of the present disclosure, based on the FIG. 4(b), when the control module 11 detects a request instruction of an image application function; in response to the request instruction, the control module 11-0, via the I2C bus, sends a start request to the visible light camera 14; in response to the start request, the visible light camera 14 enters a turn state.

One skilled in the art may understand, the image processing apparatus shown in FIG. 4(b) does not constitute a limitation of the image processing apparatus; the image processing apparatus may include more or fewer components than illustrated, or a combination of certain components, or a different arrangement of components; the image processing apparatus may be realized in various forms, for example, for mobile terminals including, such as mobile phones, tablets, laptops, palmtops, etc., and fixed terminals such as desktop computers.

The image processing method provided in the embodiment of the present disclosure may be implemented based on the image processing apparatus shown in FIG. 4(b), and FIG. 5 is a flow chart of an image processing method according to an embodiment of the present disclosure., as shown in FIG. 5, the image processing method includes the following operations.

At block S501, in response to a request instruction of an image application function, transferring acquired emission parameters to the emission driver module, and controlling the infrared camera to transmit a trigger signal to the emission driver module, when detecting the request instruction of the image application function.

When the image processing apparatus detects a request instruction of an image application function, emission parameters are acquired, and the emission parameters are transferred to the emission driver module 45; meanwhile, the request instruction is sent to the infrared camera 12, the infrared camera 12 responds to the request instruction, and transfers a trigger signal to the emission driver module 45; wherein the emission parameters are the emission parameters of the laser, including laser pulse frequency, laser pulse duty cycle and laser pulse period, etc.; the trigger signal is the signal that drives the emission driver module 45 to start emitting the laser, for example, high level.

In some embodiments, the image processing module 46 includes a signal modulation module; after the image processing apparatus detects the request instruction of the image application function, transfers the request instruction to the image processing module 46; in response to the request instruction, the signal modulation module is controlled to transfer emission parameters to the emission driver module 45.

When the image processing module detects the request instruction, transfers the request instruction to the image processing module 46; the image processing module 46 includes a signal modulation module that generates emission parameters; the image processing module 46, in response to the request instruction, controls signal modulation module to transfer emission parameters to the emission driver module 45.

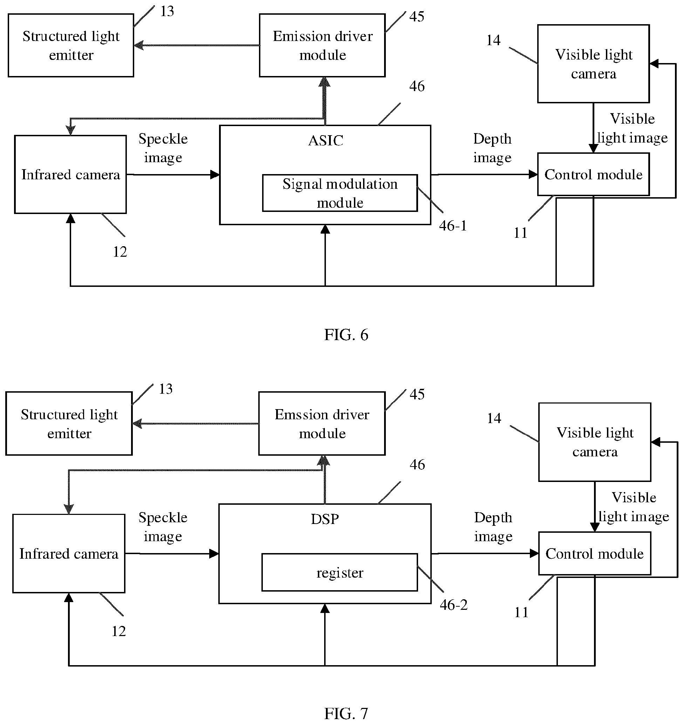

Exemplarily, based on FIG. 4(b), a schematic structural diagram of an image processing apparatus provided by an embodiment of the present disclosure may be as shown in FIG. 6. The image processing module 46, as shown in FIG. 4(b) may be an ASIC. The image processing module 46 may also include a signal modulation module 46-1; the signal modulation module 46-1 is integrated into the AISC in a form of a signal modulation circuit; the image processing module 46, when receives a request instruction, in response to the request instruction, turns on the signal modulation circuit, and realizes transferring emission parameters to the emission driver module 45.

Exemplarily, based on FIG. 4(b), a schematic structural diagram of an image processing apparatus provided by an embodiment of the present disclosure may be as shown in FIG. 7. The image processing module 46, as shown in FIG. 4(b) may be a DSP. A signal modulation module 46-1 is written in a register 46-2 in a form of a signal modulation program; the image processing module 46, when receives a request instruction, in response to the request instruction, invokes and runs the signal modulation program, and realizes transferring emission parameters to the emission driver module 45.

It should be noted that, an image processing apparatus may read and write a signal modulation program of a DSP by a control module 11, to modify emission parameters.

In some embodiments, an infrared camera 12 includes a signal modulation module 12-1, a trigger module 12-2, and a timing control circuit 12-3; after the image processing apparatus detects a request instruction of an image application function, transfers the request instruction to the timing control circuit 12-3; in response to the request instruction, by the timing control circuit 12-3, controls the signal modulation module 12-1 to transfer emission parameters to the emission driver module 45, and controls the trigger module 12-2 to transmit a trigger signal to the emission driver module 45.

When the control module 11 of the image processing apparatus detects the request instruction, transfers the request instruction to the timing control circuit 12-3; the timing control circuit 12-3 responds to the request instruction, transfers the instruction to the signal modulation module 12-1, to make the signal modulation module 12-1 transfer emission parameters to the emission driver module 45; and transfers instruction to the trigger module 12-2, to make the trigger module 12-2 to transmit the trigger signal to the emission driver module 45.

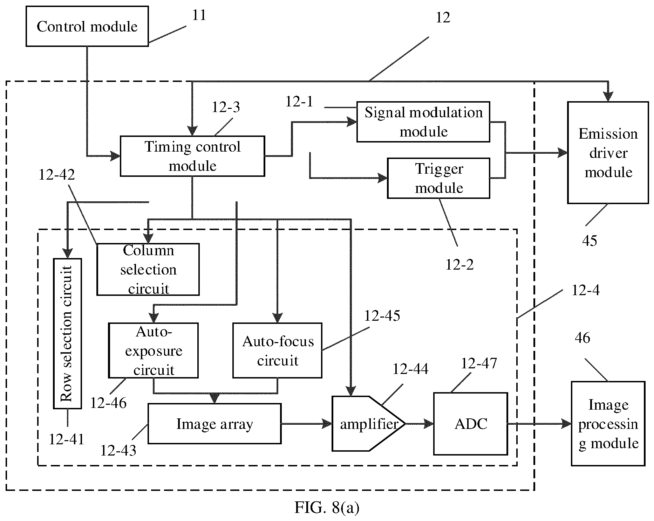

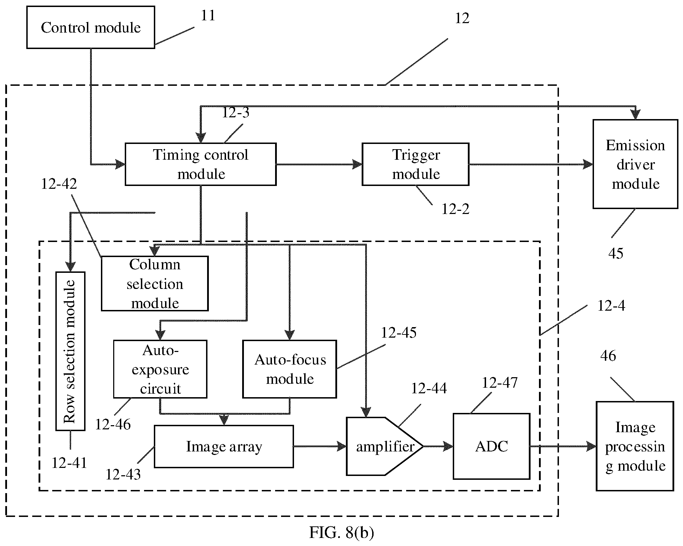

Exemplarily, a schematic structural diagram of an infrared camera, as shown in FIG. 8. The infrared camera 12 includes a signal modulation module 12-1, a trigger module 12-2 and a timing control circuit 12-3; the timing control circuit 12-3 is connected to the signal modulation module 12-1 and the trigger module 12-2 respectively; the timing control circuit 12-3 is also connected to the control module 11 and the emission driver module 45; the control module 11, when detects a request instruction, transfers the request instruction to the timing control circuit 12-3 of the infrared camera 12; in response to the request instruction, the timing control circuit 12-3 controls the signal modulation module 12-1 to transfer emission parameters to the emission driver module 45, and controls the trigger module 12-2 to transmit a trigger signal to the emission driver module 45.

It should be noted that, when the image processing module 46 includes the signal modulation module 46-1, the infrared camera 12 does not include signal modulation module 12-1, a schematic structural diagram of the infrared camera 12 is as shown in FIG. 8(b).

In some embodiments, an image application function includes face-unlock, face payment, and 3D modeling. When a control module 11 of the image processing apparatus detects that a user starts any image application function, a request instruction of the image application function is generated.

Exemplarily, taking face-unlock as an example, a user turns on a screen of the image processing apparatus by a real button or a virtual button of the image processing apparatus; when a control module 11 detects that the screen is turned on, and determines that the image processing apparatus is in lock screen status, determines that the user turns on the face-unlock function, generates a request instruction of the face-unlock function, i.e. a face-unlock request.

At block S502, controlling the structured-light emitter to emit a laser by the emission driver module, and transmitting a synchronization signal to the infrared camera by the emission driver module, in response to the trigger signal.

After the emission driver module 45 receives the emission parameters and the trigger signal, the emission driver module 45 controls the structured-light emitter 13 to emit a laser according to the emission parameters, and transmit a synchronization signal to the infrared camera 12.

In some embodiments, the emission parameters include laser pulse frequency, laser pulse duty cycle and laser pulse period. The emission driver module 45 controls the structured-light emitter 13 to emit a laser periodically, according to the emission parameters. For example, a laser pulse frequency may be 33 times per second, correspondingly, a laser pulse duty cycle may be 10%, and a laser pulse period is about 33ms.

It may be seen that, the emission driver module 45 and the infrared camera 12 are directly connected. The emission driver module 45 only needs to transfer a synchronization signal directly to the infrared camera 12 once when the laser starts to be emitted, and controls the infrared camera 12 to shoot when the infrared camera 12 receives the synchronization signal. Thus, realizing that the start of shooting of the infrared camera 12 and the start of emitting of the structured-light emitter 13 are synchronized, and avoiding performing complicated adjustments on the laser pulse frequency of the depth processing chip, and the collecting frequency of the infrared camera 12.

In some embodiments, the infrared camera 12 includes a signal modulation module 12-1; the signal modulation module 12-1 is connected to the control module 11 by the timing control circuit 12-3 of the infrared camera 12. Before responding to the trigger signal, via the emission driver module 45, controlling the emission driver module 45 to emit a laser, when the control module 11 of the image processing apparatus receives a parameter modification instruction, the parameter modification instruction is transferred to the signal modulation module 12-1 by the timing control circuit 12-3; in response to the parameter modification instruction, the signal modulation module 12-1 is controlled to modify the emission parameters, to acquire updated emission parameters.

After the control module 11 receives the parameter modification instruction, transferring the parameter modification instruction to the signal modulation module 12-1 of the infrared camera 12 via the timing control circuit 12-3 to make the signal modulation module 1201 modify the emission parameters according to the acquired updated emission parameters.

Furthermore, in response to the trigger signal, via the emission driver module 45, the structured-light emitter 13 is controlled to emit a laser according to the updated emission parameters.

After the emission driver module 45 receives the updated emission parameters and the trigger signal, the emission driver module 45 controls the structured-light emitter 13 to emit a laser according to the updated emission parameters.

It should be noted that, the image processing apparatus 46 is DSP; and when the DSP includes a signal modulation module, with the same principle of the signal modulation module of the infrared camera 12 modifying the emission parameters, the signal modulation module of the DSP is controlled by the control module 11 to modify the emission parameters.

Understandably, the parameter control and adjustment of the structured light signal are realized by the signal modulation module inside the image processing module and the control module outside the image processing module. Thus, the structured light signal is controlled and adjusted conveniently, and a flexibility of a terminal controlling the structured light signal is improved.

At block S503, controlling the infrared camera to collect speckle images of a to-be-detected object, in response to the synchronization signal.

In some embodiments, the infrared camera 12 further includes an image collecting module 12-4. The emission driver module 45 transfers a synchronization signal to the timing control circuit 12-3; in response to the synchronization signal, via the timing control circuit 12-3, the image collecting module 12-4 is controlled to collect speckle images periodically.

Exemplarily, a schematic structural diagram of an infrared camera, as shown in FIG. 8(a). The infrared camera 12 further includes an image collecting module 12-4; the image collecting module 12-4 is connected to the timing control circuit 12-3; the image collecting module 12-4 includes a row selection circuit 12-41, a column selection circuit 12-42, an image array 12-43, an amplifier 12-44, an auto-focus circuit 12-45, an auto-exposure circuit 12-46, and an ADC (Analog-to-digital Converter) 12-47; wherein, the row exposure circuit 12- 41, the column selection circuit 12-42, the amplifier 12-44, the auto-focus circuit 12-45, and the auto-exposure circuit 12-46 are all connected to the timing control circuit 12-3; the image array 12-43 is connected to the amplifier 12-44; the auto-focus circuit 12-45, and the auto-exposure circuit 12-46, and the amplifier 12-44 are also connected to the analog-to-digital converter 12-47. The ADC 12-47 is connected to the image processing module 46.

Further, in response to the synchronization signal, the timing control circuit 12-3 controls the image array 12-43 to receive an exposure time from the auto-exposure circuit 12-46, and receives an exposure level from the auto-focus circuit 12-45; and also the timing control circuit 12-3 selects to connect the row selection circuit 12-41 or the column selection circuit 12-42; the image array 12-43 begins to expose according to the exposure time and exposure level, i.e., the light signal is converted into an electric charge, and then the image array 12-43 transfers the electric charge to the amplifier 12-44; the amplifier 12-44 amplifies the electric charge and then transfers it to the analog-to-digital converter 12-47, which generates the speckle image.

At block S504, controlling the infrared camera to transfer the speckle images to the image processing module.

After the infrared camera 12 acquires each frame of the speckle image, the infrared camera 12 transmits each frame of the speckle image to the image processing module 46 to enable the image processing module 46 to process each frame of the speckle image.

At block S505, controlling the image processing module to acquire depth images of the to-be-detected object by performing depth calculation on the speckle images, and realize the image application function based on the depth images, wherein the depth images represent 3-Dimensional (3D) structure features of the to-be-detected object.

A depth calculation is performed by the image processing module 46 on each speckle image frame to acquire each depth images, and the image processing module 46 transmits each depth images to the control module 11 to enable the control module 11 to realize an image application function based on all depth images.

In some embodiments, the speckle images are periodically captured by the infrared camera 12 and transmitted to the image processing module 46, and the image processing module 46 performs depth calculation on each frame of the captured speckle images to acquire each depth images; further, the image processing module 46 may generate video stream information based on the multiple depth images after acquiring the multiple depth images, and transmit the video stream information to the control module 11.

In some embodiments, after operation S501, the image processing method further includes: measuring time by controlling the infrared camera 12 to start counting time at a moment of beginning to transfer the trigger signal, which is used as a start time; acquiring a time length, until detecting that the infrared camera receives the synchronization signal; generating an exception warning message by controlling the infrared camera, and displaying the exception warning message, when the time measurement being greater than or equal to a preset duration, wherein the exception warning message represents that an exception occurs in the emission driver module.

While the infrared camera 12 transmits a trigger signal to the emission driver module 45, a moment of beginning the transmission is used as a start timing to start counting time, until the infrared camera 12 receives a synchronization signal and stop counting time, and a time measurement is acquired. When the time measurement is greater than or equal to a preset duration, the infrared camera 12 is controlled to generate an exception warning message, and display the exception warning message, wherein the exception warning message represents that an exception occurs in the emission driver module.

Exemplarily, the preset duration may be a maximum interval duration set by a user based on an exposure time and a laser pulse frequency, and after the transmission of the trigger signal from the infrared camera 12 to the emission driver module 45, and after a maximum interval duration, the start time of the infrared camera 12 and the start time of the emission of the structured-light emitter 13 remain synchronized in a case that the infrared camera 12 receives the synchronization signal from the emission driver module 45.

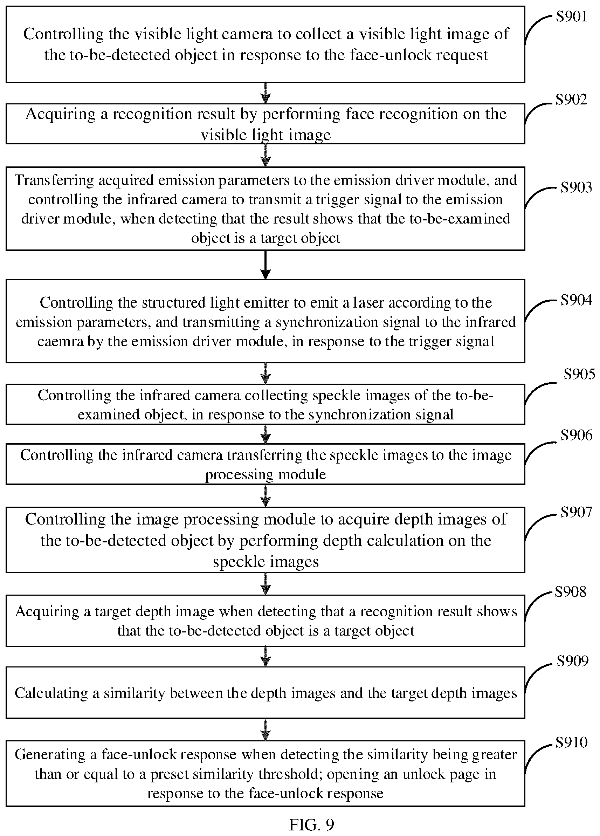

It should be noted that, for a face-unlock function, a request instruction includes a face-unlock function. FIG. 9 is a flow chart of an image processing method according to another embodiment of the present disclosure; as shown in FIG. 9, the image processing method includes the following operations.

At block S901, controlling the visible light camera to collect a visible light image of the to-be-detected object in response to the face-unlock request.

The image processing apparatus further includes a light source. When the control module 11 detects a face-unlock request, the control module 11 controls the light source to emit a light, and transfers the face-unlock request to the visible light camera 14. In response to the face-unlock request, the visible light camera 14 shoots the to-be-detected object, and collects the visible light image; wherein the visible light image include a 2D color image.

At block S902, acquiring a recognition result by performing face recognition on the visible light image. The control module 11 receives the visible light image from the visible light camera 46, determines whether a face exists in the visible light image, and acquires a recognition result; wherein the recognition result includes a face that exists in the visible light image, or a face does not exist in the visible light image.

In some embodiments, a visible light image collected by the visible light camera 14 are usually 2D images. The image processing device may realize the face recognition function inside the control module 11 by an image feature matching algorithm, etc., to use the control module to perform face recognition on the visible images, and in some other embodiments, it may also use the control module 11 to invoke other image recognition modules on the terminal where an image processing apparatus is located, to perform face recognition on the visible images. Functional modules and specific methods of face recognition are not limited by the embodiments of the present disclosure.

At block S903, transferring acquired emission parameters to the emission driver module, and controlling the infrared camera to transmit a trigger signal to the emission driver module, when detecting that the result shows that the to-be-examined object is a target object.

The control moduSected object is not a target object; wherein the target object is human.

At block S904, controlling the structured light emitter to emit a laser according to the emission parameters, and transmitting a synchronization signal to the infrared camera by the emission driver module, in response to the trigger signal.

At block S905, controlling the infrared camera collecting speckle images of the to-be-examined object, in response to the synchronization signal.

At block S906, controlling the infrared camera transferring the speckle images to the image processing module.

The realization process of the operations S904-S906 is the same as the realization process of the operations S502-S504.

At block S907, controlling the image processing module to acquire depth images of the to-be-detected object by performing depth calculation on the speckle images.

The realization process of the operations S907 is the same as the realization process of the operations S505.

At block S908, acquiring a target depth image when detecting that a recognition result shows that the to-be-detected object is a target object.

When the control module 11 determines that the recognition result shows that the to-be-detected object is human, a target depth image is acquired from a register of the image processing apparatus; wherein the target depth image is a pre-acquired depth image of a target user.

At block S909, calculating a similarity between the depth images and the target depth image.

The control module 11 calculates the similarity between the depth images and the target depth image, and determines whether the similarity is less than a preset similarity threshold, wherein the preset similarity threshold is set based on a minimum similarity between different depth images of a same person.

At block S910, generating a face-unlock response when detecting the similarity being greater than or equal to a preset similarity threshold; opening an unlock page in response to the face-unlock response.

When the control module 11 determines that the similarity is greater than or equal to the preset similarity threshold, and generates a face-unlock response; when the control module 11 determines that the similarity is less than the preset similarity threshold, and does not generate a face-unlock response. In response to the face-unlock response, an unlock page is opened, and the control module 11 controls a display of the image processing apparatus to display an unlock page.

The order of execution of the operation S908 is not limited by the embodiments of the present disclosure; the order of execution of the operation S908 may be at anywhere after the operation S902 and before the operation S909.

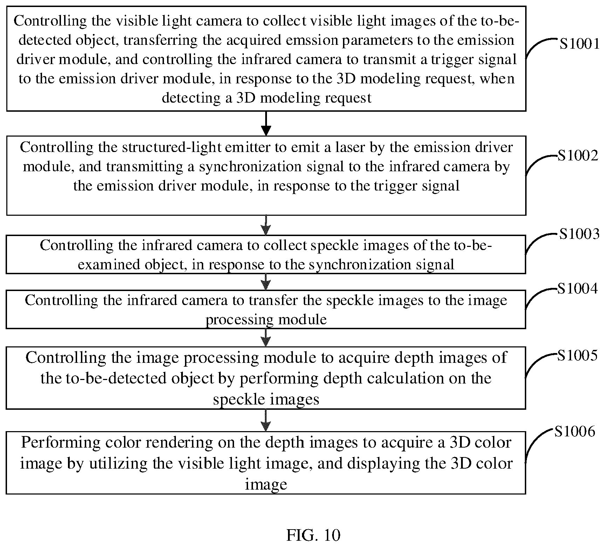

It should be noted that, for the 3D modeling function, the request instruction includes a 3D modeling request. FIG. 10 is a flow chart of an image processing method according to further another embodiment of the present disclosure. As shown in FIG. 10, the image processing method includes the following operations.

S1001, controlling the visible light camera to collect visible light images of the to-be-detected object, transferring the acquired emssion parameters to the emission driver module, and controlling the infrared camera to transmit a trigger signal to the emission driver module, in response to the 3D modelling request, when detecting a 3D modelling request.

When the control module 11 detects the 3D modeling request, the control module 11 controls the visible light camera 14 to shoot the to-be-detected object, and collects the visible light image; wherein the 3D modeling request is a request instruction of 3D modeling function.

At block S 1002, controlling the structured-light emitter to emit a laser by the emission driver module, and transmitting a synchronization signal to the infrared camera by the emission driver module, in response to the trigger signal.

At block S1003, controlling the infrared camera to collect speckle images of the to-be-examined object, in response to the synchronization signal.

At block S1004, controlling the infrared camera to transfer the speckle images to the image processing module.

The realization process of the operations S1002-S1004 is the same as the realization process of the operations S502-S504.

S1005, controlling the image processing module to acquire depth images of the to-be-detected object by performing depth calculation on the speckle images.

S1006, performing color rendering on the depth images to acquire a 3D color image by utilizing the visible light image, and displaying the 3D color image.

Understandably, using the emission driver module 45 to control the structured-light emitter 13 to emit a laser and using the infrared camera 12 to collect speckle images at the same time, based on the acquired emission parameters and the trigger signal of the infrared camera 12; instead of using a depth processing chip integrated with emission driver function, to control the structured-light emitter 13 to emit a laser, and using the infrared camera 12 to collect speckle images. The emission driver module 45 is not integrated and not dependent on a depth processing chip, but functions independently; thus, the emission driver module 45 is easily repaired when it fails or is not applicable, normal collection of speckle images is ensured, and normal collection of depth images is further ensured; and the stability of the image application function is improved.

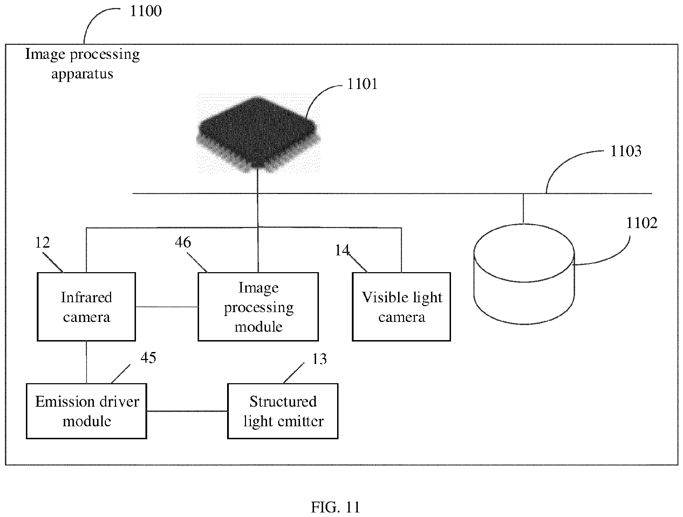

Based on the same technical concept, an image processing apparatus is provided by an embodiment of the present disclosure. As shown in FIG. 11, an image processing apparatus 1100 includes an infrared camera 12, a structured-light emitter 13, an emission driver module 45, and an image processing module 46. The infrared camera 12 is connected to the emission driver module 13 and the image processing module 46; the structured-light emitter 13 is connected to the emission driver module 45. The image processing apparatus 1100 further includes a processor 1101, a memory 1102, and a communication bus 1103. The memory 1102 communicates with the processor 1101 via the communication bus 1103; the memory 1102 stores one or more programs that are executable to the processor 1101, when the one or more programs are executed, by the processor 1101, the infrared camera 12, the structured-light emitter 13, the emission driver module 45, and the image processing module 46 are controlled, to execute any image processing method of the embodiments of the present disclosure.

It should be noted that, the image processing apparatus 1100 further includes visible light camera 14.

A computer-readable non-transitory storage medium is provided by an embodiment of the present disclosure, wherein the computer-readable non-transitory storage medium stores one or more programs, the one or more programs are executable to one or more processors 1101, when the programs are executed by the processor 1101, realizing the image processing method of the embodiments of the present disclosure.

It should be understood that references throughout the specification to "an embodiment" or "one embodiment" mean that a particular feature, structure or characteristic associated with the embodiment is included in at least one embodiment of the present disclosure. Thus, "in an embodiment" or "in one embodiment" appearing throughout the specification does not necessarily mean the same embodiment. In addition, these particular features, structures or characteristics may be combined in any suitable manner in one or more embodiments. It should be understood that in the various embodiments of the present disclosure, the number of the serial numbers of the above processes does not imply the order of execution, and the order of execution of the processes should be determined by their function and inherent logic, and should not constitute any limitation on the process of implementation of the embodiments of the present disclosure. The above serial numbers of the embodiments of the present disclosure are for description only and do not represent the merits of the embodiments

It should be noted that, in the specification, the terms "includes," "comprises," or any other variation thereof are intended to cover non-exclusive inclusion, such that a process, a method, an article, or an apparatus including a set of elements includes not only those elements, but also other elements not expressly listed, or which are inherent to such process, method, article, or apparatus. Without further limitation, the inclusion of an element defined by the statement "including a ......" does not preclude the existence of another identical element in the process, method, article, or apparatus that includes that element.

In the several embodiments provided in the present disclosure, it should be understood that the disclosed apparatus and methods, may be implemented in other ways. The embodiments of the apparatuses described above are merely schematic, for example, the division of the units described, which is only a logical functional division, may be implemented in practice in other ways, e.g., multiple units or components may be combined, or may be integrated into another system, or some features may be ignored, or not implemented. In addition, the coupling, or direct coupling, or communication connection between the components shown or discussed may be through some interface, indirect coupling, or communication connection of apparatuses or units, which may be electrical, mechanical, or other forms.

The above units illustrated as independent components may or may not be physically separated, and the components displayed as units may or may not be physical units; either located in one place or distributed to multiple network units; some or all of which may be selected to achieve the purpose of the embodiment according to practical needs.

In addition, each functional unit in each embodiment of the present disclosure may be integrated into one processing unit, or each unit may be separated as a unit, or two or more units may be integrated into one unit; the above integrated units may be implemented either in the form of hardware, or in the form of hardware plus software functional units.

It will be understood by one skilled in the art that all or some of the operations to achieve the above method embodiments may be accomplished by hardware associated with program instructions, and that the aforementioned program may be stored in a computer-readable non-transitory storage medium which, when executed, performs the operations including the above method embodiments; and that the aforementioned storage medium includes a removable storage device, a Read Only Memory (ROM), a disk or a CD-ROM and other media that may store the program code.

Or, the above integrated unit of the present disclosure, when implemented as a software function module and sold or used as an independent product, may be stored in a computer-readable non-transitory storage medium. Based on such understanding, the technical solution of embodiments of the present disclosure, which essentially or rather contributes to the prior art, may be embodied in a form of a software product, stored in a storage medium, including some instructions to enable a computer device (which may be a personal computer, a server, or a network device, etc.) to perform all or part of the method described in the various embodiments of the present disclosure. The aforementioned storage medium includes a removable storage device, a ROM, a disk or a CD-ROM, and other media that may store program code.

The above described are only specific implementations of the present disclosure, but the scope of protection of the present disclosure is not limited to them, and any changes or substitutions that may be readily thought of by any person skilled in the art within the technical scope disclosed by the present disclosure shall be covered by the scope of protection of the present disclosure. Therefore, the scope of protection of the present disclosure shall be subject to the scope of protection of the claims

### Industrial Applicability

In an embodiment of the present disclosure, the emission driver module may work independently without being integrated into the depth processing chip or being dependent on the depth processing chip, thus making it easier to repair the emission driver module when it fails or is not applicable; ensuring normal collection of the speckle images; and thus ensuring a normal acquisition of the depth images; and improving the stability of the image application function. Also, the parameters of the structured light signal are controlled and adjusted, by the signal modulation module inside the image processing module and the control module outside the image processing module, so that the structured light signal may be easily controlled and adjusted, and the flexibility of the terminal modulating the structured light signal is improved.

## Claims

1. An image processing method, applied in an image processing apparatus, the image processing apparatus comprising an infrared camera, a structured-light emitter, an emission driver module, and an image processing module, the method comprising:
in response to a request instruction of an image application function, transferring acquired emission parameters to the emission driver module, and controlling the infrared camera to transmit a trigger signal to the emission driver module, when detecting the request instruction of the image application function;
controlling the structured-light emitter to emit a laser by the emission driver module, and transmitting a synchronization signal to the infrared camera by the emission driver module, in response to the trigger signal;
controlling the infrared camera to collect speckle images of a to-be-detected object, in response to the synchronization signal;
controlling the infrared camera to transfer the speckle images to the image processing module;
controlling the image processing module to acquire depth images of the to-be-detected object by performing depth calculation on the speckle images, and realize the image application function based on the depth images, wherein the depth images represent 3-Dimensional (3D) structure features of the to-be-detected object.

2. The method as claimed in claim 1, wherein the image processing module comprises a signal modulation module;
wherein in response to a request instruction of an image application function, the transferring acquired emission parameters to the emission driver module, comprises:
transferring the request instruction to the image processing module;
controlling the image processing module to transfer the emission parameters to the emission driver module, in response to the request instruction.

3. The method as claimed in claim 1, wherein the infrared camera comprises a signal modulation signal, a trigger module, and a timing control circuit;
wherein in response to a request instruction of an image application function, the transferring acquired emission parameters to the emission driver module, and controlling the infrared camera to transmit a trigger signal to the emission driver module, comprise:
transferring the request instruction to the timing control circuit;
controlling the signal modulation module to transfer the emission parameters to the emission driver module, and controlling the trigger module to transmit the trigger signal to the emission driver module, by the timing control circuit, in response to the request instruction.

4. The method as claimed in claim 3, wherein the infrared camera comprises an image collecting module;
wherein the controlling the infrared camera to collect speckle images of a to-be-detected object, comprises:
transmitting the synchronization signal to the timing control circuit;
controlling the image collecting module to collect the speckle images periodically, by the timing control circuit, in response to the synchronization signal.

5. The method as claimed in claim 1, wherein the infrared camera comprises a signal modulation module;
before the controlling the structured-light emitter to emit a laser by the emission driver module, in response to the trigger signal, the method further comprises:
transferring a parameter modification instruction to the signal modulation module, in response to receiving the parameter modification instruction;
acquiring updated emission parameters by controlling the signal modulation signal to modify the emission parameters, in response to the parameter modification instruction.

6. The method as claimed in claim 5, wherein the controlling the structured-light emitter to emit a laser by the emission driver module, in response to the trigger signal, comprises:
controlling the structured-light emitter to emit a laser according to the updated emission parameters, by the emission driver module, in response to the trigger signal.

7. The method as claimed in claim 1, wherein the request instruction comprises a face-unlock request, and the image processing apparatus further comprises a visible light camera;
wherein the transferring acquired emission parameters to the emission driver module, and controlling the infrared camera to transmit a trigger signal to the emission driver module by controlling the infrared camera in response to a request instruction of an image application function, when detecting the request instruction of the image application function, comprises:
controlling the visible light camera to collect a visible light image of the to-be-detected object in response to the face-unlock request, when detecting the face-unlock request;
acquiring a recognition result by performing face recognition on the visible light image;
transferring the emission parameters to the emission driver module, and controlling the infrared camera to transmit the trigger signal to the emission driver module, in response to detecting that the recognition result shows the to-be-detected object is a target object.

8. The method as claimed in claim 7, wherein the realize the image application function based on the depth images, comprises:
acquiring a target depth image;
calculating a similarity between the depth images and the target depth image;
generating a face-unlock response when detecting the similarity being greater than or equal to a preset similarity threshold; opening an unlock page in response to the face-unlock response.

9. The method as claimed in claim 1, wherein the request instruction comprises a 3D modeling request, and the image processing apparatus comprises a visible light camera;
before the transferring acquired emission parameters to the emission driver module, the method further comprises:
controlling the visible light camera to collect a visible light image of the to-be-detected object in response to the 3D modeling request, when detecting the 3D modeling request.

10. The method as claimed in claim 9, wherein the realize the image application function based on the depth images, comprises:
performing color rendering on the depth images to acquire a 3D color image by utilizing the visible light image, and displaying the 3D color image.

11. The method as claimed in claim 1, after the transferring acquired emission parameters to the emission driver module, and controlling the infrared camera to transmit a trigger signal to the emission driver module, the method further comprising:
controlling the infrared camera to start counting time at a moment of beginning to transfer the trigger signal, which is used as a start time;
acquiring a time length, until detecting that the infrared camera receives the synchronization signal;
controlling the infrared camera to generate an exception warning message when the time length is larger than or equal to a preset time length, and displaying the warning message, wherein the exception warning message represents that an occurs in the emission driver module.

12. An image processing apparatus, comprising:
a control module, an infrared camera, a structured-light emitter, an emission driver module, and an image processing module, wherein the control module is connected to the infrared camera and the image processing module via a bus, the infrared camera is connected to the control module, the emission driver module, and the image processing module, the image processing module is connected to the control module and the infrared camera;
the control module, configured for transferring acquired emission parameters to the emission driver module, and transmitting a trigger signal to the emission driver module by controlling the infrared camera, in response to the request instruction, when detecting a request instruction of an image application function;
the emission driver module, configured for emitting a laser by controlling the structured-light emitter, and transmitting a synchronization signal to the infrared camera, in response to the trigger signal;
the infrared camera, configured for collecting speckle images of a to-be-detected object, in response to the synchronization signal; transferring the speckle images to the image processing module;
the image processing module, configured for acquiring depth images of the to-be-detected object by performing depth calculation on the speckle images, and realizing the image application function based on the depth images, wherein the depth images represents 3D structure features of the to-be-detected object.

13. The apparatus as claimed in claim 12, wherein
the image processing module comprises a signal modulation module;
the control module is further configured for transferring the request instruction to the image processing module;
the image processing module is further configured for controlling the signal modulation module to transfer the emission parameters to the emission driver module, in response to the request instruction.

14. The apparatus as claimed in claim 13, wherein
the image processing module is an ASIC (Application Specific Integrated Circuit), the signal modulation module is integrated into the dedicated integrated circuit in a form of a signal modulation circuit;
the image processing module is further configured for turning on the signal modulation circuit, in response to the request instruction, and realizing transferring the emission parameters to the emission driver module.

15. The apparatus as claimed in claim 13, wherein
the image processing module is a digital signal processor, the signal modulation module is integrated into a register of the digital signal processor in a form of a signal modulation program;
the image processing module is configured for invoking and running the signal modulation program, in response to the request instruction, and realizing transferring the emission parameters to the emission driver module.

16. The apparatus as claimed in claim 12, wherein
the infrared camera comprises a signal modulation signal, a trigger module, and a timing control circuit; the timing control circuit is respectively connected to the signal modulation module and the trigger module, and the timing control circuit is connected to the control module and the emission driver module;
the control module is further configured for transferring the request instruction to the timing control circuit;
the timing control module is further configured for controlling the signal modulation module to transfer the emission parameters to the emission driver module, in response to the request instruction, and transmitting the trigger signal to the emission driver module by controlling the trigger module.

17. The apparatus as claimed in claim 16, wherein
the infrared camera further comprises an image collecting module; the image collecting module is connected to the timing control module;
the infrared camera is further configured for transmitting the synchronization signal to the timing control circuit;
the timing control module is further configured for controlling the image collecting module to collect the speckle images periodically, in response to the synchronization signal.

18. The apparatus as claimed in claim 12, wherein
the infrared camera comprises a signal modulation module; the signal modulation module is connected to the control module via a timing control circuit of the infrared camera;
the control module is further configured for, before the emission driver module responding to the trigger signal and emitting a laser by the emission driver module controlling the structured-light emitter, transferring a parameter modification instruction to the signal modulation module via the timing control circuit, when receiving the parameter modification instruction.
the signal modulation module is configured for acquiring updated emission parameters by modifying the emission parameters, in response to the parameter modification instruction.

19. The apparatus as claimed in claim 18, wherein
the emission driver module is further configured for controlling the structured-light emitter to emit a laser according to the updated emission parameters, in response to the trigger signal.

20. The apparatus as claimed in claim 12, wherein
the request instruction comprises a face-unlock request, and the image processing apparatus further comprises a visible light camera; the visible light camera is connected to the control module via a bus;
the control module is further configured for controlling the visible light camera to collect visible a light image of the to-be-detected object, in response to the face-unlock request, when detecting the face-unlock request;
acquiring a recognition result by performing face recognition on the visible light image;
transferring the emission parameters to the emission driver module, and controlling the infrared camera to transmit the trigger signal to the emission driver module, when detecting that the recognition result shows that the to-be-detected object is a target object;
or,
before the transferring acquired emission parameters to the emission driver module, controlling the visible light camera to collect a visible light image of the to-be-detected object, in response to the 3D modeling.

21. An image processing apparatus, wherein the image processing apparatus comprises an infrared camera, a structured-light emitter, an emission driver module, and an image processing module; the infrared camera is connected to the emission driver module and the image processing module; the structured-light emitter is connected to the emission driver module;
the image processing module further comprises: a processor, a memory, and a communication bus, the memory communicates with the processor via the communication bus, and the memory stores one or more programs that are executable to the processor;
when the one or more programs are executed, the infrared camera, the structured-light emitter, the emission driver module, and the image processing module are controlled by the processor, to execute the method of any one of claims 1 to 11.

22. A computer-readable non-transitory storage medium, wherein the computer-readable non-transitory storage medium stores one or more programs, the one or more programs are executed by one or more processors, to realize the method of any one of claims 1 to 11.
